Europäisches Patentamt

European Patent Office

Office européen des brevets

(19)

(11) Numéro de publication : **0 526 286 A1**

(12) **DEMANDE DE BREVET EUROPEEN**

(21) Numéro de dépôt : **92401949.0**

(22) Date de dépôt : **07.07.92**

(51) Int. Cl.⁵ : **H04B 10/14**

(30) Priorité : **30.07.91 FR 9109657**

(43) Date de publication de la demande :
**03.02.93 Bulletin 93/05**

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Nyeki, Pierre**
**Thomson-CSF, SCPI-CEDEX 67**
**F-92045 Paris La Defense (FR)**

(74) Mandataire : **Desperrier, Jean-Louis et al**
**THOMSON-CSF SCPI B.P. 329**
**F-92402 COURBEVOIE CEDEX (FR)**

(54) **Procédé de transmission par fibre optique d'un signal issu d'un capteur notamment d'un hydrophone.**

㊐ L'invention concerne la transmission sur fibre optique (107) des signaux électriques issus de capteurs (101).

Elle consiste à utiliser une source (102) à faible longueur de cohérence et un modulateur (105) à grande différence de chemin optique. On démodule avec un démodulateur (108) identique au modulateur.

Elle permet de transmettre de signaux d'au moins 80 dB de dynamique sur une distance supérieure à 1 km.

FIG.2

EP 0 526 286 A1

La présente invention se rapporte aux procédés qui permettent de transmettre par fibre optique un signal issu d'un capteur. Elle s'applique plus particulièrement aux signaux provenant d'un hydrophone, plus particulièrement d'un hydrophone piézoélectrique.

Il est connu du brevet français n° 81 12546 de transmettre les signaux provenant d'un hydrophone en utilisant une fibre optique. Pour cela le signal électrique émis par l'hydrophone est appliqué à un interféromètre du type Mach-Zehnder afin de moduler le signal lumineux provenant d'une source optique à grande longueur de cohérence, un laser par exemple. Le signal lumineux ainsi modulé est transmis par une fibre optique à un détecteur qui fonctionne sur l'intensité du signal reçu, une simple photo-diode par exemple. Ce détecteur délivre un signal électrique conforme au signal électrique émis par l'hydrophone.

On sait qu'un interféromètre du type Mach-Zehnder comprend deux bras de longueurs égales qui se rejoignent en sortie. Avec des électrodes et par effet electrooptique on crée une différence de phase $\Delta\phi$ entre les signaux transmis et introduit dans le signal lumineux sortant de l'interféromètre une variation d'intensité donnée par $\frac{I0}{2}$ (1+cos$\Delta\phi$), I0 étant l'intensité incidente en entrée de l'interféromètre.

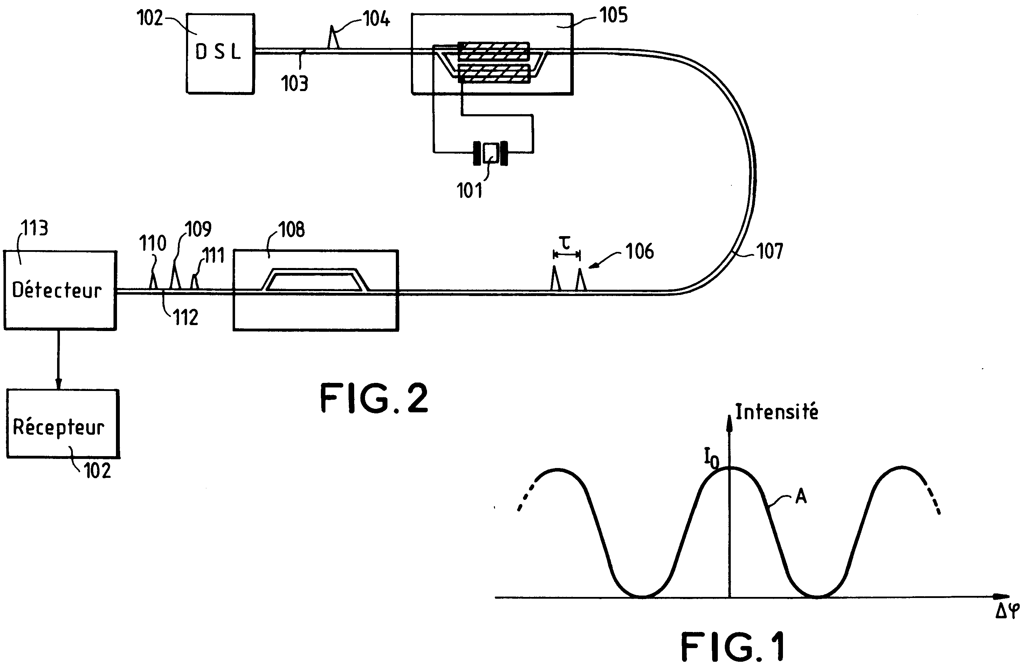

La variation de l'intensité en fonction de $\Delta\phi$ est représentée sur la figure 1. Pour obtenir un fonctionnement sensiblement linéaire du modulateur, on place le point de repos, correspondant à un signal d'entrée nul, en un point A situé au milieu du flanc d'une arche de sinusoïde, et correspondant donc à $\Delta\phi = \frac{\Pi}{2}$. Pour éviter d'utiliser dans le signal d'entrée une composante continue non nulle lorsque le signal utile est nul, on fixe le point de fonctionnement A en biaisant de manière mécanique l'interféromètre. Pour cela on ajuste la différence de longueur entre les bras pour obtenir, lorsque la tension d'entrée est nulle, une différence de marche égale à $\lambda/4$.

Il n'est malheureusement pas possible d'obtenir par construction une précision suffisante sur cette différence de longueur. Ceci limite la dynamique utilisable, ce qui présente dans certains cas un inconvénient grave. Pour un hydrophone utilisé dans l'écoute des bruits marins par exemple, on souhaite avoir au moins une dynamique de 80 dB, ce qui nécessite une précision supérieure à 1% sur la différence de marche. De manière pratique on ne sait pas obtenir une telle précision.

Ce système présente en outre l'inconvénient d'être trop sensible à l'environnement qui vient perturber les caractéristiques de la fibre optique utilisée et donc celle des signaux transmis, ces perturbations étant fonction de la longueur de la fibre. Ceci limite cette longueur à quelques dizaines de mètres, ce qui n'est pas suffisant dans bien des cas, par exemple lorsqu'on veut utiliser ce type de transmission dans les antennes acoustiques linéaires remorquées dont la longueur peut dépasser le kilomètre pour des applications à la prospection pétrolière.

Pour pallier ces inconvénients, l'invention propose un procédé de transmission par fibre optique d'un signal issu d'un capteur, notamment d'un hydrophone, principalement caractérisé en ce qu'il comprend les étapes suivantes :

- émission d'une suite d'impulsions optiques à faible longueur de cohérence.
- modulation de ces impulsions par le signal du capteur dans un premier interféromètre déséquilibré présentant une différence de chemin optique beaucoup plus grande que la longueur de cohérence ;
- transmission du signal issu du premier interféromètre par une fibre optique ;
- démodulation du signal transmis dans un deuxième interféromètre déséquilibré sensiblement identique au premier ;
- détection du signal démodulé émis par le deuxième interféromètre

D'autres particularités et avantages de l'invention apparaîtront clairement dans la description suivante, faite à titre d'exemple non limitatif en regard des figures annexées, qui représentent :

- la figure 1, un graphique de modulation selon l'art connu ; et
- la figure 2, le schéma d'une liaison utilisant le procédé selon l'invention.

La liaison optique représentée sur la figure 2 permet de transmettre des signaux à faible bande passante (quelques kHz) provenant d'un hydrophone 101, par exemple du type piézoélectrique, à un récepteur 102, par exemple une station d'écoute marine.

Une source optique 102 à spectre large, donc à faible longueur de cohérence Lc, par exemple une diode super-luminescente (DSL), émet sur un tronçon de fibre optique 103 des impulsions optiques représentées symboliquement en 104 sur la figure. Ces signaux optiques sont polarisés linéairement, soit par construction de la source, soit par toute autre méthode connue, et toutes les précautions sont prises pour que cette polarisation soit maintenue tout au long du trajet des signaux.

Le tronçon de fibre optique 103 applique les signaux optiques 104 à un modulateur 105. Celui-ci est un interféromètre déséquilibré de type connu, qui comprend deux bras de longueurs différentes réunis à chaque extrémité, et deux électrodes permettant de modifier l'indice optique n du substrat sur lequel sont intégrés les bras, afin de faire varier la différence de chemin optique $\delta$ (nl) entre les deux bras. Ces électrodes sont connectées à l'hydrophone 101.

La différence de chemin optique est très supérieure à la longueur de cohérence de la source, soit $\delta$ (nl)>>Lc, (dix fois par exemple). Comme cette longueur de cohérence est faible, cette condition peut être facilement respectée et la différence de chemin peut être réalisée de manière reproductible.

Dans ces conditions les impulsions 104 se dédoublent, et en sortie du modulateur on obtient des paires d'impulsions 106 séparées en temps d'une durée $T = \dfrac{\delta(nl)}{c}$ (c vitesse de la lumière). Cette durée correspond à un déphasage égal à $\dfrac{2\pi(nl)}{\lambda 0}$ ($\lambda 0$ longueur d'onde centrale de la source) qui est fonction du signal électrique V (t) provenant de l'hydrophone 101, par l'intermédiaire de l'influence de V(t) sur l'indice n.

Ces paires d'impulsions sont émises sur une fibre optique 107, monomode par exemple, qui permet de les transmettre en maintenant leur polarisation. La longueur de cette fibre peut dépasser le km sans que les perturbations apportées aux signaux optiques qu'elle transmet viennent gêner la démodulation ultérieure.

Cette fibre optique vient appliquer les paires d'impulsions à un deuxième interféromètre déséquilibré 108 qui sert de récepteur, le premier pouvant être considéré comme l'émetteur. Ce deuxième interféromètre est identique au premier, en particulier quant à la différence de chemin optique. Il peut toutefois ne pas comporter d'électrodes de commande, sauf éventuellement pour ajuster le biais de manière connue, ou pour ajouter une modulation de phase.

Dans ce deuxième interféromètre les impulsions de chaque paire passent par les deux bras, ce qui dédouble chacune d'elle en donnant naissance en principe à deux nouvelles paires d'impulsions mais qui composent en fait un triplet d'impulsions, comme on va le voir

En effet, en désignant par C le chemin optique court dans un interféromètre, et par L le chemin optique long, on obtient en sortie du deuxième interféromètre quatre impulsions que l'on peut noter respectivement, selon les chemins successifs encourus dans les deux interféromètres, par CC, CL, LC, LL. Comme les combinaisons CL et LC ont la même longueur optique, les impulsions correspondantes interfèrent de manière cohérente en sortie du deuxième modulateur et forment donc une impulsion unique 109 encadrée par les deux impulsions 110 (CC) et 111 (LL). Seule l'intensité de l'impulsion centrale 109 varie sinusoïdalement en fonction du déphasage $\dfrac{2\pi(nl)}{\lambda 0}$ obtenu dans le premier interféromètre 105 sous l'action des signaux provenant de l'hydrophone 101.

Le deuxième interféromètre est relié par un tronçon de fibre optique 112 à un détecteur 113, par exemple une photo-diode, qui délivre un signal électrique correspondant au signal électrique délivré par l'hydrophone 101. Un tel dispositif s'applique aux antennes sonar où chaque hydrophone est lu au moyen d'une paire d'interféromètres déséquilibrés dont la reproductibilité ne pose pas de problèmes.

A titre d'exemple, on peut utiliser une source dont la longueur de cohérence est de $60\lambda 0$ et une différence de chemin optique de l'ordre de 1000 $\lambda$ 0.

On peut ainsi transmettre le signal d'un hydrophone, et de manière générale de tout capteur délivrant un signal électrique, sous forme de tension ou de charge, à bande relativement faible avec grande dynamique, sur une longueur imnportante, pouvant excéder le km, sans craindre les perturbations dues à l'environnement.

On peut également faire un multiplexage en cascadant plusieurs modulateurs, soit en série avec des déséquilibres croissants, soit en échelle avec un même déséquilibre et un séquencement temporel utilisé avec une lecture successive.

## Revendications

1. Procédé de transmission par fibre optique (107) d'un signal issu d'un capteur (101), notamment d'un hydrophone, caractérisé en ce qu'il comprend les étapes suivantes :
   - émission (102) d'une suite d'impulsions optiques (104) à faible longueur de cohérence.
   - modulation de ces impulsions par le signal du capteur (101) dans un premier interféromètre déséquilibré (105) présentant une différence de chemin optique beaucoup plus grande que la longueur de cohérence ;
   - transmission du signal (106) issu du premier interféromètre par une fibre optique (107) ;
   - démodulation du signal transmis dans un deuxième interféromètre déséquilibré (108) sensiblement identique au premier ;
   - détection (113) du signal démodulé (109) émis par le deuxième interféromètre.

2. Procédé selon la revendication 1, caractérisé en ce que l'impulsion optique (104) est polarisée linéairement et que l'on maintient cette polarisation tout au long du parcours optique.

3. Procédé selon l'une quelconque des revendications 1 et 2, caractérisé en ce que l'on utilise une fibre optique monomode (107).

4. Procédé selon l'une quelconque des revendications 1 à 3, caractérisé en ce que Iron utilise une diode super-luminescente (102) pour émettre l'impulsion optique.

5. Procédé selon l'une quelconque des revendications 1 à 4, caractérisé en ce que la longueur de cohérence des impulsions (104) est de l'ordre de 60 fois la longueur d'onde moyenne des impulsions.

6. Procédé selon l'une quelconque des revendications 1 à 5, caractérisé en ce que la différence de chemin optique est de l'ordre de 1000 fois la longueur d'onde moyenne des impulsions.

7. Procédé selon l'une quelconque des revendications 1 à 6, caractérisé en ce que la dynamique du signal issu du capteur (101) est au moins de 80 dB.

8. Procédé selon l'une quelconque des revendications 1 à 7, caractérisé en ce que la longueur de la fibre optique (107) est supérieure à 1km.

EP 0 526 286 A1

102 DSL 104 105 103 101

113 Détecteur 110 109 111 108 τ 106 107 112

Récepteur 102

**FIG.2**

Intensité

$I_0$ A

$\Delta \varphi$

**FIG.1**

**Office européen des brevets**

## RAPPORT DE RECHERCHE EUROPEENNE

Numero de la demande

EP 92 40 1949

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y<br>A | US-A-4 882 775 (COLEMAN)<br>* revendications 1,6,11; figure 2 *<br>--- | 1-4<br>5,6 | H04B10/14 |
| Y<br><br><br><br><br><br>A | JOURNAL OF LIGHTWAVE TECHNOLOGY.<br>vol. LT-3, no. 5, Octobre 1985, NEW YORK US<br>pages 1062 - 1071<br>J.L.BROOKS ET AL 'Coherence Multiplexing of Fiber-Optic Interferometric Sensors'<br>* page 1068, colonne de gauche, alinéa 1 - colonne de droite, alinéa 3; figure 5 *<br>--- | 1-4<br><br><br><br><br><br>5 | |
| A | FR-A-2 656 752 (THOMSON-CSF)<br>* page 3, ligne 16 - page 4, ligne 12 *<br>--- | 1,4-6 | |
| A | PROCEEDINGS OF THE 1978 INTERNATIONAL OPTICAL COMPUTING CONFERENCE 5 Septembre 1978, LONDON,GB<br>pages 67 - 74<br>S.A.KINGSLEY ET AL 'Fibre-optic Microphones and Hydrophones : A Comparison with Conventional Devices'<br>* abrégé; figures 1,5 *<br>--- | 1-4,8 | |
| A | EP-A-0 251 632 (LELAND STANFORD)<br>* page 3, ligne 45 - page 4, ligne 13 *<br>* page 19, ligne 47 - ligne 49; revendication 1 *<br><br>----- | 1-3 | |

**DOMAINES TECHNIQUES RECHERCHES (Int. Cl.5)**

H04B<br>H04J<br>H04R<br>G01D<br>G02F

Le présent rapport a été établi pour toutes les revendications

| Lieu de la recherche | Date d'achèvement de la recherche | Examinateur |
|---|---|---|
| LA HAYE | 28 OCTOBRE 1992 | GOUDELIS M. |

EPO FORM 1503 03.82 (P0402)